# EUROPÄISCHE PATENTSCHRIFT

(11) **EP 1 264 159 B1**
(45) Veröffentlichungstag und Bekanntmachung des Hinweises auf die Patenterteilung: **02.07.2008**
(21) Anmeldenummer: 01911556.7
(22) Anmeldetag: 31.01.2001
(51) Int. Cl.: G01D 5/14, F15B 15/28, G01D 18/00

(54) **POSITIONSERFASSUNGSEINRICHTUNG**
POSITION DETECTION SYSTEM
DISPOSITIF DE DETECTION DE POSITION

(30) Priorität: 17.03.2000 DE 10013196
(43) Veröffentlichungstag der Anmeldung: 11.12.2002
(73) Patentinhaber: Festo AG & Co., 73734 Esslingen (DE)
(72) Erfinder: REININGER, Thomas, 73249 Wernau (DE)
(74) Vertreter: Vetter, Hans
(86) Internationale Anmeldenummer: PCT/EP2001/000990
(87) Internationale Veröffentlichungsnummer: WO 2001/069181

(56) Entgegenhaltungen:
- EP-A- 0 893 668
- GB-A- 2 107 070
- US-A- 4 471 304
- US-A- 4 833 406
- US-A- 5 241 267
- PATENT ABSTRACTS OF JAPAN vol. 1995, no. 10, 30. November 1995 (1995-11-30) & JP 07 190704 A (SMC CORP), 28. Juli 1995 (1995-07-28)

## Beschreibung

Die Erfindung betrifft eine Positionserfassungseinrichtung mit einer Sensoranordnung zur Erzeugung wenigstens eines Sensorsignals in Abhängigkeit eines sich vorbeibewegenden Körpers.

Übliche, beispielsweise aus der DE 19 504 229 A1 bekannte Positionserfassungseinrichtungen, insbesondere zur Positionserfassung eines Kolbens in einem Zylinder, dienen dazu, bei einer oder mehreren bestimmten Kolbenpositionen ein Positionssignal zu erzeugen, durch das Anzeige- und/ oder Steuervorgänge auslösbar sind. Hierzu wird der Kolben mit einem Permanentmagneten versehen, und als Sensoranordnung wird ein Magnetfeldsensor, insbesondere ein Hallsensor, eingesetzt. Beim Passieren des Permanentmagneten wird im Hallsensor ein sinusartiges Signal erzeugt, das in einem Komparator mit einem vorgegebenen festen Referenzwert verglichen wird. Wird dieser Referenzwert erreicht bzw. überschritten, so wird ein Positionssignal ausgelöst. Die Sensoranordnung ist üblicherweise in Längsrichtung verschiebbar angeordnet und kann an beliebigen Positionen fixiert werden. Da das Positionssignal sehr exakt erfasst werden muss, ist eine aufwendige und exakte Justierung der Sensoranordnung erforderlich.

Eine Aufgabe der vorliegenden Erfindung besteht darin, bei einer derartigen Positionserfassungseinrichtung ein exaktes Positionssignal ohne aufwendige mechanische Justierung zu erzeugen bzw. zu erreichen.

Diese Aufgabe wird erfindungsgemäß durch eine Positionserfassungseinrichtung mit den Merkmalen des Anspruchs 1 gelöst.

Der Vorteil der erfindungsgemäßen Positionserfassungseinrichtung besteht insbesondere darin, dass die Sensoranordnung nur ungefähr im Bereich der zu erfassenden Position fixiert zu werden braucht, während die exakte Justierung dann rein elektrisch durch Veränderung des Referenzwerts erfolgen kann. Dies ist sogar von der Ferne aus möglich. Diese Justierung kann in einfacher Weise dadurch erfolgen, dass der sich bewegende Körper, also beispielsweise ein Kolben, in die gewünschte Position gebracht wird, in der ein Positionssignal ausgelöst werden soll, wobei dann der Referenzwert so lange verändert wird, bis das Positionssignal ausgelöst wird.

Durch die in den Unteransprüchen aufgeführten Maßnahmen sind vorteilhafte Weiterbildungen und Verbesserungen der im Anspruch 1 angegebenen Positionserfassungseinrichtung möglich.

Eine bevorzugte Ausführung besteht darin, dass der Körper ein Magnetfeld erzeugt oder einen Magneten zur Erzeugung eines solchen Magnetfelds besitzt, und dass die Sensoranordnung wenigstens einen Magnetfeldsensor enthält, insbesondere einen Hallsensor. Prinzipiell ist die Erfindung jedoch auch auf andere Messprinzipien anwendbar, zum Beispiel auf optische, Infrarot- oder elektromagnetische Messverfahren.

In einer bevorzugten Ausführungsform enthält die Sensoranordnung zwei Sensoren, von denen vorzugsweise der eine ein Sinussignal und der andere ein Kosinussignal proportional zur Relativposition von Körper und Sensoranordnung erzeugt, wobei eine Signalaufbereitungsschaltung zur Umwandlung dieser Signale in ein im wesentlichen linear von der Relativposition abhängiges Signal vorgesehen ist. Ein solches Sinussignal und ein Kosinussignal können beispielsweise durch zwei Magnetfeldsensoren erzeugt werden, die in einem Winkel von 45° zueinander angeordnet sind. Durch Überlagerung des Sinussignals und des Kosinussignals kann ein im wesentlichen linear ansteigendes bzw. linear abfallendes Signal erzeugt werden, wobei bei der Umwandlung nicht die absolute Amplitude, sondern nur die Phasenlage maßgebend ist. Damit wird man von Schwankungen der Magnetfeldstärke durch Toleranzschwankungen und Inhomogenitäten des Magneten sowie vom Temperaturgang des Magneten unabhängig.

Als Magnetfeldsensoren sind besonders zwei Hallsensor-Brückenschaltungen geeignet, die als fertige Bauteile im Handel erhältlich sind.

Die Komparatoranordnung weist vorzugsweise einen Fensterkomparator oder Schmitt-Trigger auf. Hierdurch kann man den Signalbeginn und das Signalende des Positionssignals justieren. Als Steuermittel zur Veränderung des Referenzwerts eignen sich vor allem ein elektrisch einstellbares Potentiometer oder eine Signalspeichereinrichtung für den Referenzwert, insbesondere ein digitaler Zähler oder ein digitaler Speicher. Diese können entweder im Bereich der Sensoranordnung angeordnet sein und mit dieser eine Baueinheit bilden, oder aber sie können auch räumlich entfernt angeordnet sein, wobei die Einstellung der Steuermittel und/oder die Vorgabe des Referenzwerts dann ferngesteuert über eine elektrische Leitung, insbesondere einen Bus, oder drahtlos erfolgt. Zur Einstellung der Steuermittel bzw. zur Vorgabe des Referenzwerts kann wenigstens ein manuelles Bedienungselement vorgesehen sein.

Die wenigstens die Komparatoranordnung aufweisende Auswerteschaltung kann zusammen mit der Sensoranordnung eine Baueinheit bilden, oder aber diese Auswerteschaltung ist räumlich entfernt von der Sensoranordnung positioniert und insbesondere in einer programmgesteuerten Steuereinheit integriert. Falls eine analoge Komparatoranordnung vorgesehen ist, so müsste das digitale Signal von einer solchen programmgesteuerten Steuereinheit mittels eines D/A-Wandlers in ein analoges Signal umgewandelt werden.

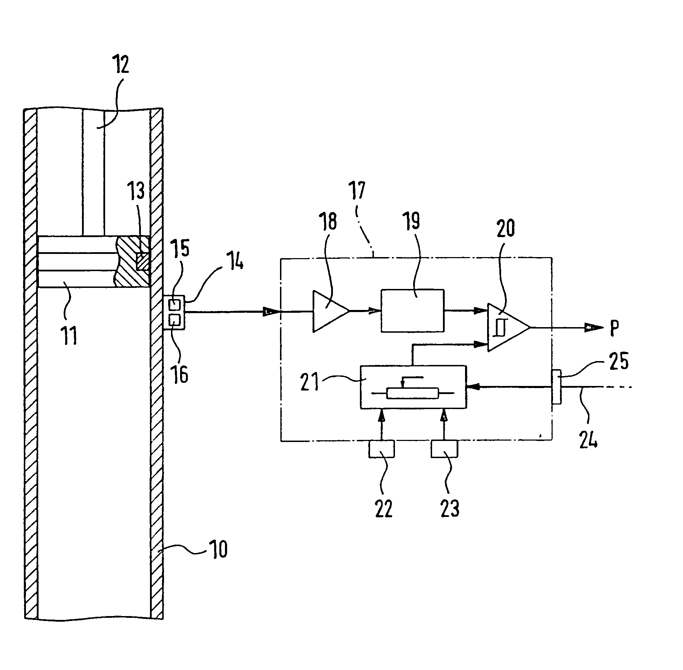

Ein Ausführungsbeispiel der Erfindung ist in der Zeichnung dargestellt und in der nachfolgenden Beschreibung näher erläutert. Die einzige Figur zeigt schematisch eine Kolben-Zylinder-Anordnung mit einer Sensoranordnung sowie eine damit verbundene Auswerteschaltung als Ausführungsbeispiel der Erfindung.

In einem Zylinder 10 ist ein Kolben 11 mit einer Kolbenstange 12 längsverschiebbar angeordnet. In den Kolben 11 ist ein Permanentmagnet 13 eingesetzt.

An der Zylinderwandung des Zylinders 10 ist eine schematisch dargestellte Sensoranordnung 14 angebracht, die in nicht dargestellter Weise auch längsverschiebbar und in verschiedenen Positionen fixierbar ausgebildet ist. Selbstverständlich können auch mehrere solcher Sensoranordnungen zur Erfassung mehrerer Kolbenpositionen vorgesehen sein. Die Sensoranordnung oder -anordnungen können auch in der Zylinderwandung integriert sein.

Die Sensoranordnung 14 enthält zwei Hallsensoren 15, 16, für die handelsübliche Hallsensor-Brücken verwendet werden können. Diese Hallsensoren 15, 16 sind so positioniert, beispielsweise relativ zueinander um einen Winkel von 45° versetzt angeordnet, dass sie unter Einwirkung des Magnetfelds des Permanentmagneten 13 beim Passieren desselben zwei um 90° gegeneinander phasenverschobene Ausgangssignale liefern. Selbstverständlich können auch andere Magnetfeldsensoren, wie Spulen oder dergleichen, eingesetzt werden, die ebenfalls durch entsprechende Positionierung zwei solche phasenverschobene Ausgangssignale liefern, also ein Sinussignal und ein Kosinussignal.

Passiert der Kolben 11 die Sensoranordnung 14, so liefern die Hallsensoren 15, 16 ein Sinus- und ein Kosinussignal proportional zu der jeweiligen Stellung der Permanentmagneten 13 zur Sensoranordnung 14. Diese Signale werden einer Auswerteschaltung 17 und dort über einen Eingangsverstärker 18 einer Signalaufbereitungsschaltung 19 zugeführt. Anstelle oder zusätzlich zum Eingangsverstärker 18 kann auch noch ein Signalfilter vorgesehen sein.

In der Signalaufbereitungsschaltung 19 werden die beiden Signale in ein lineares Ausgangssignal umgewandelt, insbesondere durch Überlagerung des Sinussignals und des Kosinussignals. Daher ist bei der Umwandlung nicht die absolute Amplitude, sondern nur die Phasenlage maßgebend. Dieses lineare Ausgangssignal wird einem Komparator 20 zugeführt und dort mit einem veränderbaren Referenzwert verglichen. Bei Signalgleichheit wird ein Positionssignal P als Ausgangssignal erzeugt.

Ist der Komparator 20 als Fensterkomparator bzw. Schmitt-Trigger ausgebildet, so kann der Einschaltzeitpunkt und der Ausschaltzeitpunkt des Positionssignals eingestellt werden, wobei eine einstellbare Hysterese bzw. eine variable Einschaltschwelle und eine variable Ausschaltschwelle vorgesehen sein können. Bei Bedarf können hierzu zwei unterschiedliche Referenzsignale erzeugt werden.

Das Referenzsignal wird durch ein elektrisch einstellbares Potentiometer 21 erzeugt. Über zwei Tastschalter 22, 23 kann der Referenzwert vergrößert oder verringert werden, wobei selbstverständlich auch andere manuelle Einstellmittel möglich sind. Zur Justierung wird die Sensoranordnung 14 in eine ungefähre Position gebracht, in der der Kolben 11 bzw. dessen Permanentmagnet 13 ein Positionssignal erzeugen soll. Der Kolben 11 selbst wird in diejenige Position gebracht, in der er ein Positionssignal auslösen soll. Nun wird durch Betätigung der Tastschalter 22 bzw. 23 der Referenzwert über das Potentiometer 21 nach Bedarf vergrößert oder verringert, bis der Komparator 20 schaltet. Der Referenzwert ist damit justiert. Bei Bedarf können dann noch ein zweiter oder weitere Referenzwerte in entsprechender Weise oder ähnlicher Weise erzeugt werden.

Anstelle oder zusätzlich zu den Tastschaltern 22, 23 kann das Potentiometer 21 auch über eine externe Leitung 24 verändert werden, die an einen verbindungsanschluss 25 der Auswerteschaltung 17 angeschlossen wird. Mit Hilfe eines solchen externen Signals, das beispielsweise von einer externen Steuereinheit erzeugt wird, die eine programmgesteuerte Steuereinheit sein kann, ist es möglich, das Potentiometer 21 bzw. die gesamte Positionserfassungseinrichtung ferngesteuert zu justieren.

Anstelle eines einstellbaren Potentiometers 21 kann auch eine Signalspeichereinrichtung treten, beispielsweise ein digitaler Zähler oder ein anderer digitaler Speicher. Der Zählerwert, der den Referenzwert vorgibt, kann ebenfalls mittels der Tastschalter 22, 23 und/oder über die Leitung 24 vorgegeben werden. Dasselbe gilt für einen sonstigen digitalen Speicher, dessen Speicherwert ebenfalls über die Leitung 24 vorgegeben werden kann. Bei einem Zähler oder sonstigen digitalen Speicher ist selbstverständlich noch ein Digital/Analog-Wandler erforderlich, um dem Komparator 20 einen analogen Referenzwert zuführen zu können. Andererseits kann der Komparator 20 auch als digitaler Komparator ausgebildet sein, wobei dann in der Signalaufbereitungsschaltung 19 ein entsprechendes digitales Sensorsignal gebildet werden muss.

Die Auswerteschaltung 17 kann zusammen mit der Sensoranordnung 14 eine kompakte, am Zylinder 10 anbringbare Baueinheit bilden. Andererseits kann sie auch als externe Baueinheit separat oder in einer externen Steuereinheit integriert angeordnet sein. In diesem Falle können die beschriebenen Baugruppen der Auswerteschaltung 17 überwiegend auch durch Mikroprozessorfunktionen realisiert werden. Die Veränderung des Referenzwerts kann dann über übliche Bedienungsfunktionen des Rechners erfolgen.

Eine weitere Alternative besteht darin, in der Auswerteschaltung 17 anstelle des einstellbaren Potentiometers 21 oder einer Signalspeichereinrichtung den Referenzwert für den Komparator 20 direkt über die Leitung 24 mittels einer externen Steuereinrichtung bzw. eines externen Rechners vorzugeben. Bei der Leitung 24 kann es sich auch um eine Busleitung handeln, wobei dann eventuell erforderliche Busstationen vorgesehen sein müssen.

Die Erfindung ist selbstverständlich nicht auf ZylinderKolben-Anordnungen beschränkt, sondern vielmehr überall dort einsetzbar, wo beliebige Körper an Sensoranordnungen vorbeibewegt werden. Anstelle der Erfassung von Positionen bei linearer Bewegung sind auch nicht-lineare Bewegungen, zum Beispiel Kreisbewegungen, entsprechend erfassbar.

Um den Justierbereich für die elektrische bzw. elektronische Justierung zu vergrößern, kann dieser Einstellbereich auch elektrisch gespreizt werden.

Anstelle der Fernsteuerung des elektrisch einstellbaren Potentiometers 21 oder einer anderen Signalspeichereinrichtung oder anstelle der Vorgabe des Referenzwerts direkt über die Leitung 24 können diese Vorgänge auch drahtlos erfolgen, beispielsweise über Funk oder Infrarot.

In einer alternativen Ausgestaltung kann die Sensoranordnung in der Bewegungsrichtung auch mehrere hintereinander angeordnete gleiche Sensoren oder Sensorkombinationen besitzen. Diese erzeugen daher auch gleiche Signalverläufe, die zeitlich entsprechend der örtlichen Versetzung der Sensoren versetzt sind. An jeder Position liegt daher eine bestimmte Signalkombination dieser Sensoren vor, wobei alle Signalkombinationen durch Abspeicherung der Signalverläufe erfasst werden können. Will man nun eine bestimmte Position erfassen, so werden die für diese Position abgespeicherten Signale einer entsprechenden Zahl von Komparatoren als Referenzwerte vorgegeben, so dass die gewünschte Position sehr exakt erfasst werden kann und Fehler sofort festgestellt werden können. Selbstverständlich können auch Toleranzfenster vorgegeben werden. Zur elektronischen Verstellung der Positionserfassung werden entsprechend andere Kombinationen von Referenzwerten vorgegeben.

## Patentansprüche

1. Positionserfassungseinrichtung mit einer Sensoranordnung (14) zur Erzeugung wenigstens eines Sensorsignals in Abhängigkeit eines sich vorbeibewegenden Körpers (11), wobei sich das wenigstens eine Sensorsignal bei der Vorbeibewegung kontinuierlich verändert, mit einer das wenigstens eine Sensorsignal mit wenigstens einem Referenzwert vergleichenden Komparatoranordnung (20), wobei Steuermittel zur elektronischen Justierung der Sensoranordnung (14) durch Veränderung des Referenzwerts vorgesehen sind und das Ausgangssignal der Komparatoranordnung (20) das Positionssignal (P) zur Erfassung einer Relativposition von Körper (11) und Sensoranordnung (14) bildet.

2. Positionserfassungseinrichtung nach Anspruch 1, **dadurch gekennzeichnet, dass** der Körper (11) ein Magnetfeld erzeugt oder einen Magneten (13) zur Erzeugung eines solchen Magnetfelds besitzt, und dass die Sensoranordnung (14) wenigstens einen Magnetfeldsensor (15, 16) enthält, insbesondere einen Hallsensor.

3. Positionserfassungseinrichtung nach Anspruch,1 oder 2, **dadurch gekennzeichnet, dass** die Sensoranordnung (14) wenigstens zwei Sensoren enthält, deren Signale in einer Signalaufbereitungsschaltung (19) in ein im wesentlichen linear von der Relativposition von Körper (11) und Sensoranordnung (14) abhängiges Signal umgesetzt werden.

4. Positionserfassungseinrichtung nach Anspruch 3, **dadurch gekennzeichnet, dass** ein Sensorsignal ein Sinussignal und das andere ein Kosinussignal ist.

5. Positionserfassungseinrichtung nach Anspruch 4, **dadurch gekennzeichnet, dass** zwei Magnetfeldsensoren (15, 16) in einem Winkel von 45° zueinander angeordnet sind.

6. Positionserfassungseinrichtung nach Anspruch 5, **dadurch gekennzeichnet, dass** als Magnetfeldsensoren zwei Hallsensor-Brückenschaltungen vorgesehen sind.

7. Positionserfassungseinrichtung nach einem der vorhergehenden Ansprüche, **dadurch gekennzeichnet, dass** die Komparatoranordnung (20) wenigstens einen Fensterkomparator oder Schmitt-Trigger aufweist, wobei beide Schalt-Referenzwerte veränderbar sind.

8. Positionserfassungseinrichtung nach einem der vorhergehenden Ansprüche, **dadurch gekennzeichnet, dass** die Sensoranordnung (14) in der Bewegungsrichtung mehrere hintereinander angeordnete gleiche Sensoren oder Sensorkombinationen besitzt, deren Signale mittels einer entsprechenden Anzahl von Komponenten der Komparatoranordnung (20) mit Referenzwerten verglichen werden, die den Sensorsignalen an der zu erfassenden Relativposition entsprechen.

9. Positionserfassungseinrichtung nach einem der vorhergehenden Ansprüche, **dadurch gekennzeichnet, dass** die Steuermittel ein elektrisch einstellbares Potentiometer (21) oder eine Signalspeichereinrichtung für den Referenzwert, insbesondere einen digitalen Zähler oder digitalen Speicher, aufweisen.

10. Positionserfassungseinrichtung nach einem der vorhergehenden Ansprüche, **dadurch gekennzeichnet, dass** zur Einstellung der Steuermittel wenigstens ein manuelles Bedienungselement (22, 23) vorgesehen ist.

11. Positionserfassungseinrichtung nach einem der vorhergehenden Ansprüche, **dadurch gekennzeichnet, dass** die Einstellung der Steuermittel und/oder die Vorgabe des Referenzwerts ferngesteuert über eine elektrische Leitung (24), insbesondere einen Bus, oder drahtlos erfolgt.

12. Positionserfassungseinrichtung nach einem der vorhergehenden Ansprüche, **dadurch gekennzeichnet, dass** die wenigstens Komparatoranordnung (20) aufweisende Auswerteschaltung (17) zusammen mit der Sensoranordnung (14) eine Baueinheit bildet.

13. Positionserfassungseinrichtung nach einem Ansprüche 1 bis 11, **dadurch gekennzeichnet, dass** die wenigstens die Komparatoranordnung (20) aufweisende Auswerteschaltung (17) und/oder die Steuermittel räumlich entfernt von der Sensoranordnung (14) und insbesondere in einer programmierbaren Steuereinheit integriert sind.

14. Positionserfassungseinrichtung nach einem der vorhergehenden Ansprüche, **dadurch gekennzeichnet, dass** der Körper (11) der Kolben einer Kolben-Zylinder-Anordnung ist und die Sensoranordnung (14) am Zylinder (10), insbesondere längsverschiebbar, angeordnet oder im Zylinder (10) integriert ist.

## Claims

1. Position detection device with a sensor assembly (14) for generating at least one sensor signal in dependence on a passing body (11), wherein the at least one sensor signal changes continuously as the body passes, with a comparator assembly (20) comparing the at least one sensor signal to at least one reference value, wherein control means are provided for electronically adjusting the sensor assembly (14) by changing the reference value and wherein the output signal of the comparator assembly (20) forms the position signal (P) for detecting a relative position of body (11) and sensor assembly (14).

2. Position detection device according to claim 1, **characterised in that** the body (11) generates a magnetic field or comprises a magnet (13) for the generation of such a magnetic field, and **in that** the sensor assembly (14) comprises at least one magnetic field sensor, in particular a Hall sensor.

3. Position detection device according to claim 1 or 2, **characterised in that** the sensor assembly (14) comprises at least two sensors, the signals of which are converted into a signal with a substantially linear dependence on the relative position of body (11) and sensor assembly (14) in a signal processing circuit (19).

4. Position detection device according to claim 3, **characterised in that** one sensor signal is a sine signal while the other sensor signal is a cosine signal.

5. Position detection device according to claim 4, **characterised in that** two magnetic field sensors (15, 16) are arranged at an angle of 45° to one another.

6. Position detection device according to claim 5, **characterised in that** two Hall sensor bridge circuits are provided as magnetic field sensors.

7. Position detection device according to any of the preceding claims, **characterised in that** the comparator assembly (20) comprises at least one window comparator or Schmitt trigger, both switching reference values being variable.

8. Position detection device according to any of the preceding claims, **characterised in that** the sensor assembly (14) is provided with a plurality of identical sensors or sensor combinations arranged one behind the other in the direction of movement, the signals of which are compared to reference values corresponding to the sensor signals at the relative position to be detected by means of a matching number of components of the comparator assembly (20).

9. Position detection device according to any of the preceding claims, **characterised in that** the control means comprise an electrically adjustable potentiometer (21) or a latch device for the reference value, in particular a digital counter or digital memory.

10. Position detection device according to any of the preceding claims, **characterised in that** at least one manual control (22, 23) is provided for adjusting the control means.

11. Position detection device according to any of the preceding claims, **characterised in that** the adjustment of the control means and/or the presetting of the reference value are/is carried out by remote control via an electric line (24), in particular a bus, or a wireless link.

12. Position detection device according to any of the preceding claims, **characterised in that** the evaluation circuit (17) comprising at least one comparator assembly (20) forms an assembly together with the sensor assembly (14).

13. Position detection device according to any of claims 1 to 11, **characterised in that** the evaluation circuit (17) comprising at least one comparator assembly (20) and/or the control means are/is located at a distance from the sensor assembly (14) and are/is in particular integrated into a programmable control unit.

14. Position detection device according to any of the preceding claims, **characterised in that** the body (11) is the piston of a piston and cylinder assembly and **in that** the sensor assembly (14) is mounted, in particular capable of longitudinal movement, on the cylinder (10) or is integrated into the cylinder (10).

## Revendications

1. Dispositif de détection de position avec un agencement de capteurs (14) pour générer au moins un signal de capteur en fonction d'un corps (11) se déplaçant devant, le signal de capteur au nombre de un au moins changeant continuellement lors du passage, avec un agencement de comparateurs (20) qui compare le signal de capteur au nombre de un au moins à au moins une valeur de référence, des moyens de commande pour le réglage électronique de l'agencement de capteurs (14) par la modification de la valeur de référence étant prévus et le signal de sortie de l'agencement de comparateurs (20) formant le signal de position (P) pour la détection d'une position relative du corps (11) et de l'agencement de capteurs (14).

2. Dispositif de détection de position selon la revendication 1, **caractérisé en ce que** le corps (11) génère un champ magnétique ou possède un aimant (13) permettant de générer un tel champ magnétique, et **en ce que** l'agencement de capteurs (14) comprend au moins un capteur de champ magnétique (15, 16), notamment un capteur à effet Hall.

3. Dispositif de détection de position selon la revendication 1 ou 2, **caractérisé en ce que** l'agencement de capteurs (14) comprend au moins deux capteurs, dont les signaux sont convertis, dans un circuit de mise en forme de signaux (19), en un signal dépendant de la position relative du corps (11) et de l'agencement de capteurs (14) de façon sensiblement linéaire.

4. Dispositif de détection de position selon la revendication 3, **caractérisé en ce qu'**un signal de capteur est un signal sinusoïdal et l'autre est un signal cosinusoïdal.

5. Dispositif de détection de position selon la revendication 4, **caractérisé en ce que** deux capteurs de champ magnétique (15, 16) sont disposés selon un angle de 45° l'un par rapport à l'autre.

6. Dispositif de détection de position selon la revendication 5, **caractérisé en ce que** deux circuits en pont de capteur à effet Hall sont prévus en tant que capteurs de champ magnétique.

7. Dispositif de détection de position selon l'une des revendications précédentes, **caractérisé en ce que** l'agencement de comparateurs (20) comprend au moins un comparateur à fenêtre ou un déclencheur de Schmitt, les deux valeurs de référence de commutation pouvant être modifiées.

8. Dispositif de détection de position selon l'une des revendications précédentes, **caractérisé en ce que** l'agencement de capteurs (14) possède, dans la direction de déplacement, plusieurs capteurs ou combinaisons de capteurs identiques disposés les uns derrière les autres, dont les signaux sont comparés, au moyen d'un nombre correspondant de composants de l'agencement de comparateurs (20), avec des valeurs de référence qui correspondent aux signaux de capteur sur la position relative à détecter.

9. Dispositif de détection de position selon l'une des revendications précédentes, **caractérisé en ce que** les moyens de commande comportent un potentiomètre (21) réglable de façon électrique ou un dispositif de stockage de signaux pour la valeur de référence, notamment un compteur numérique ou une mémoire numérique.

10. Dispositif de détection de position selon l'une des revendications précédentes, **caractérisé en ce qu'**au moins un élément de commande manuelle (22, 23) est prévu pour le réglage des moyens de commande.

11. Dispositif de détection de position selon l'une des revendications précédentes, **caractérisé en ce que** le réglage des moyens de commande et/ou la détermination de la valeur de référence est réalisé de manière commandée à distance par le biais d'une ligne électrique (24), notamment un bus, ou sans fil.

12. Dispositif de détection de position selon l'une des revendications précédentes, **caractérisé en ce que** le circuit de traitement (17) comprenant au moins l'agencement de comparateurs (20) forme, conjointement avec l'agencement de capteurs (14), une unité constructive.

13. Dispositif de détection de position selon l'une des revendications 1 à 11, **caractérisé en ce que** le circuit de traitement (17) comprenant au moins l'agencement de comparateurs (20) et/ou les moyens de commande sont intégrés de manière distante dans l'espace de l'agencement de capteurs (14) et en particulier dans une unité de commande programmable.

14. Dispositif de détection de position selon l'une des revendications précédentes, **caractérisé en ce que** le corps (11) est le piston d'un agencement piston-cylindre, et **en ce que** l'agencement de capteurs (14) est disposé au niveau du cylindre (10), en particulier de manière mobile longitudinalement, ou est intégré dans le cylindre (10).
